Europäisches Patentamt

European Patent Office

Office européen des brevets

(19)

(11) Veröffentlichungsnummer: **0 077 469**
**B1**

# (12) EUROPÄISCHE PATENTSCHRIFT

(45) Veröffentlichungstag der Patentschrift:
**04.09.85**

(21) Anmeldenummer: **82108724.4**

(22) Anmeldetag: **21.09.82**

(51) Int. Cl.⁴: **C 09 C 1/00,** C 09 C 1/02,
C 04 B 33/14

(54) **Keramische Farbkörper.**

(30) Priorität: **15.10.81 DE 3140914**

(43) Veröffentlichungstag der Anmeldung:
**27.04.83 Patentblatt 83/17**

(45) Bekanntmachung des Hinweises auf die Patenterteilung:
**04.09.85 Patentblatt 85/36**

(84) Benannte Vertragsstaaten:
**DE FR GB IT NL**

(56) Entgegenhaltungen:
**EP - A - 0 035 798**
**DE - A - 2 037 512**
**DE - C - 977 735**
**DE - C - 977 737**

(73) Patentinhaber: **Degussa Aktiengesellschaft,
Weissfrauenstrasse 9, D-6000 Frankfurt am Main 1 (DE)**

(72) Erfinder: **Fischer, Rober, Dr., Dipl.-Chem., Hanauer
Strasse 1, D-6053 Obertshausen (DE)**
Erfinder: **de Ahna, Heinz-Dieter, Dr., Dipl.-Chem., Wolfg.
Borchert-Strasse 11, D-6073 Egelsbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung einer Matrix, in die farbgebende Verbindungen als diskrete Teilchen in die Matrixsubstanz oder als farbgebende Ionen in das Matrixgitter eingebunden sind, als keramischer Farbkörper.

Keramische Farbkörper, bei denen die farbgebenden Substanzen entweder als diskrete Teilchen in der Matrix eingeschlossen (Einschlusspigmente) oder in Ionenform im Gitter der Matrix eingebunden sind (Wirtsgitterpigmente), sind im grossen Umfang bekannt. Ihre Herstellung erfolgt normalerweise durch Erhitzen der Ausgangssubstanzen für die Matrix und der farbgebenden Verbindungen in Anwesenheit eines Mineralisators. Als Mineralisatoren verwendet man im allgemeinen Fluoride, insbesondere Alkalifluoride.

So werden beispielsweise gemäss der US-PS Nr. 2441447 blaue und grüne keramische Farbkörper durch Erhitzen von Zirkonoxid, Siliziumoxid und Vanadinpentoxid in Anwesenheit eines Fluoridmineralisators bei Temperaturen von 550 bis 1200° C hergestellt. Die Anwesenheit eines Fluoridmineralisators ist zwar nicht unbedingt notwendig, doch muss man dann zur Herstellung der Matrix bei wesentlich höheren Temperaturen glühen. Dennoch ist das Arbeiten mit Fluoridmineralisatoren aus Umweltgründen unerwünscht.

Aus der EP-A Nr. 0035798 sind anorganische Pigmente in Form von Rostschutzmitteln bekannt, die aus 15 bis 80% Phosphat und 20 bis 80% Magnesiumoxid bestehen und im glasartigen Zustand vorliegen. Sie können zwar gefärbt sein, sind aber nicht als keramische Farbkörper einsetzbar, da die Farbe weder thermisch noch chemisch stabil ist.

Es war daher Aufgabe der vorliegenden Erfindung, keramische Farbkörper zu finden, die den keramischen Erfordernissen, wie Glasur-, Lichtund Temperaturbeständigkeit, entsprechen und zu deren Herstellung kein Fluoridmineralisator erforderlich ist.

Diese Aufgabe wurde erfindungsgemäss gelöst durch die Verwendung einer Matrix aus gemischten Erdalkaliphosphaten, in die farbgebende Verbindungen als diskretische Teilchen in die Matrixsubstanz oder als farbgebende Ionen in das Matrixgitter eingebunden sind.

Besonders bewährt hat sich die Verwendung von Kalzium/Magnesium-Phosphaten und Barium/Magnesium-Phosphaten als keramische Farbkörper, jedoch sind auch andere Erdalkaliphosphate mit zwei oder mehreren Erdalkalimetallen verwendbar, wie Magnesium, Kalzium, Strontium und Barium.

Als farbgebende Verbindungen werden vorzugsweise Oxide der Übergangsmetalle eingesetzt, wie $Cr_2O_3$, $CoO$, $CuO$, $NiO$, $Fe_2O_3$, $MnO_2$ oder $Pr_6O_{11}$. Dabei geben diese Chromophore mit den verschiedenen Erdalkaliphosphaten teilweise unterschiedlich gefärbte keramische Farbkörper.

Folgende Beispiele sollen die erfindungsgemässen keramischen Farbkörper näher erläutern:

*Beispiel 1:*

40 g $(NH_4)_2HPO_4$ werden mit 26,4 g $CaCO_3$, 11,2 g $MgCO_3$, 7,5 g Alkalichlorid und 10 g $CuO$ innig gemischt. Diese Mischung wird in einem Tiegel bei 1000° C geglüht. Das erhaltene Glühgut wird gemahlen, gewaschen und getrocknet. Der erhaltene türkisfarbene Farbkörper ist in den meisten Glasursystemen beständig.

*Beispiel 2:*

An Stelle von 10 g $CuO$ werden 13 g Mn-IIcarbonat eingesetzt. Die erhaltene Mischung wird in einem Tiegel bei 1150° C geglüht. Nach dem Mahlen, Waschen und Trocknen des Glühguts kann der so erhaltene Farbkörper zur Herstellung rosafarbener Glasuren verwendet werden.

*Beispiel 3:*

39,5 g $BaCO_3$, 8,5 g $MgCO_3$, 8 g $Cr_2O_3$ und 40 g $(NH_4)_2HPO_4$ werden in einer Mühle innig gemischt und bei 1000° C kalziniert. Das Glühgut wird wie oben aufgearbeitet und der erhaltene Farbkörper zur Einfärbung von Glasuren zur Erzeugung gelbgrüner Farbtöne verwendet.

## Patentansprüche

1. Verwendung einer Matrix aus gemischten Erdalkaliphosphaten, in die farbgebende Verbindungen als diskrete Teilchen in die Matrixsubstanz oder als farbgebende Ionen in das Matrixgitter eingebunden sind, als keramischer Farbkörper.

2. Verwendung einer Matrix aus Kalzium/Magnesium-Phosphaten oder Barium/Magnesium-Phosphaten als keramischer Farbkörper nach Anspruch 1.

## Claims

1. The use of a matrix of mixed alkaline earth metal phosphates, in which the colour-providing compounds are bound as discrete particles in the matrix material or as colour-providing ions in the matrix lattice, as ceramic pigments.

2. The use of a matrix of calcium-magnesium phosphates or barium-magnesium phosphates as ceramic pigments according to Claim 1.

## Revendications

1. Utilisation comme corps colorés céramiques d'une matrice de phosphates alcalino-terreux mixtes, dans laquelle des composés conférant une coloration sont incorporés sous forme de particules séparées dans la substance de la matrice, ou sous forme d'ions conférant une coloration dans le réseau de la matrice.

2. Utilisation d'une matrice en phosphates de calcium-magnésium ou en phosphates de baryum-magnésium comme corps colorés céramiques suivant la revendication 1.